# EUROPÄISCHE PATENTSCHRIFT

(11) **EP 1 974 180 B1**
(45) Veröffentlichungstag und Bekanntmachung des Hinweises auf die Patenterteilung: **10.06.2009**
(21) Anmeldenummer: 06829761.3
(22) Anmeldetag: 20.12.2006
(51) Int. Cl.: G01B 11/00, G01B 5/012

(54) **VORRICHTUNG ZUR MESSUNG VON STRUKTUREN EINES OBJEKTS**
DEVICE FOR MEASURING STRUCTURES ON AN OBJECT
DISPOSITIF POUR MESURER DES STRUCTURES D'UN OBJET

(30) Priorität: 19.01.2006 DE 102006002619
(43) Veröffentlichungstag der Anmeldung: 01.10.2008
(73) Patentinhaber: Forschungszentrum Karlsruhe GmbH, 76133 Karlsruhe (DE)
(72) Erfinder: THELEN, Richard, 76133 Karlsruhe (DE)
(74) Vertreter: Gärtner, Stephan
(86) Internationale Anmeldenummer: PCT/EP2006/012280
(87) Internationale Veröffentlichungsnummer: WO 2007/082581

(56) Entgegenhaltungen:
- WO-A-00/60310
- DE-A1- 19 816 270
- DE-A1- 19 826 641
- DE-U1- 29 823 884

## Beschreibung

Die Erfindung betrifft eine Vorrichtung zur Messung von Strukturen eines Objekts.

Die EP 0 988 505 B1 offenbart eine Vorrichtung zur Messung von Strukturen eines Objekts mit einem Tastelement, das von einer Tasterverlängerung ausgeht, einem optischen Sensor zur Aufnahme eines Bildes des Tastelements auf.einem Sensorfeld, und einer Auswerteeinheit, mit der aus der Position des optischen Sensors zum Koordinatensystem eines Koordinatenmessgeräts und mittels des optischen Sensors gemessenen Position des Tastelements die Strukturen berechenbar sind.

Aus der DE 298 24 806 U1 ist eine weitere Vorrichtung zur Messung von Strukturen eines Objekts mit von einer Tasterverlängerung ausgehenden einem Tastelement, das als Tastscheibe oder Tastspitze ausgebildet ist, bekannt.

Die DE 26 25 097 A1 offenbart eine Lichtleitfaser, an deren planen Endfläche eine im Wesentlichen halbkugelförmige Linse angeschmolzen ist.

Aus DE 19816270 A1 ist der Oberbegriff des Anspruchs 1 bekannt.

Ausgehend hiervon ist es die Aufgabe der vorliegenden Erfindung, eine Vorrichtung zur Messung von Strukturen eines Objekts vorzuschlagen, die eine möglichst genaue Positions- oder Bewegungsbestimmung insbesondere bei sehr kleinen Tastelementen mit Abmessungen von 1 bis 10 Mikrometern ermöglicht.

Diese Aufgabe wird durch die Merkmale des Anspruchs 1 gelöst. Die abhängigen Ansprüche beschreiben vorteilhafte Ausgestaltungen der Erfindung.

Eine erfindungsgemäße Vorrichtung dient zur Messung von Strukturen eines Objekts wie z. B. der Seitenwand eines mikrostrukturierten Bauteils.

Eine erfindungsgemäße Vorrichtung ist mit einem Tastelement ausgestattet. Hierbei kann es sich wie in der EP 0 988 505 B1 um eine Kugel oder wie in der DE 298 24 806 U1 um eine Scheibe handeln, deren jeweiliger Durchmesser bekannt ist und deren optische Abbildung des Umfangs ganz oder teilweise dazu eingesetzt wird, einen Punkt an einer berührten Seitenwand des Objekts zu erfassen und in die Sichtebene einem optischen Sensors wie z.B. einer Kamera zur Aufnahme eines Bildes des Tastelements auf einem Sensorfeld zu übertragen, um schließlich eine Koordinatentransformation zur Bestimmung des absoluten Berührpunktes des Tastelements mit dem Objekt durchzuführen.

Das Tastelement ist fest oder lösbar mit einer Tasterverlängerung verbunden. Die Tasterverlängerung selbst ist entweder wie in der EP 0 988 505 B1 biegeelastisch, was besonders vorteilhaft beim Einsatz von sehr kleinen Tastelementen mit Abmessungen von 1- 10 µm ist, oder als starrer Schaft wie bei schaltenden Tastern ausgestaltet. Im letzteren Falle entfällt zwar die Nutzung des biegeelastischen Effektes des Schaftes, die Vorteile einer optischen Abbildung des Tastelements und der Wand des Objekts bei Annäherung bleiben erhalten. Aus einer Steuerung, die das Verfahren der Tastspitze bei Auslenkung der Tastspitze unterbricht, wird so ein System, das sich der Wand des Objekts geregelt annähert. Das ist besonders vorteilhaft für empfindliche oder besonders leichte Objekte, die sich ansonsten verschieben oder nur zerstörend messen lassen.

An oder um die Tasterverlängerung sind eine oder mehrere Linsen angebracht, wobei der Abstand der Linse zum Tastelement und zum optischen Sensor vorzugsweise so gewählt ist, dass das durch die Linse vergrößerte Bild des Tastelements auf dem Sensor abgebildet wird. Damit ist die Linse zwischen Tastelement und Sensor an der Tasterverlängerung angebracht.

Vorzugsweise steht die Linse bzw. das Linsensystem außerhalb des Brennpunkts des optischen Sensors und wird bevorzugt annähernd radialsymmetrisch zur Tasterverlängerung angebracht.

Besonders bevorzugt wird die Form der Linse so gewählt, dass der Krümmungsradius der dem Tastelement zugewandten Seite der Linse größer ist als der Krümmungsradius der dem Tastelement abgewandten Seite der Linse.

Die Abbildung des Tastelements ermöglicht nach dessen Darstellung durch die Linse eine genauere Positions- oder Bewegungsbestimmung des Tastelements als ohne abbildendes Linsensystem. Die Linse kompensiert oder ändert je nach Messaufgabe die numerische Apertur. Sie passt die Abbildung des Tastelements dem zur Verfügung stehenden Sehfeld an.

Ist der Durchmesser der Linse kleiner als die Bilddiagonale des optischen Sensors, so lässt sich die Bewegung der Linse selbst auf dem Bild verfolgen. Damit dient die Verlagerung des Bildes des Tastelements aus dem Schwerpunkt bei Gebrauch eines Bildverarbeitungssystems zusätzlich zur Überwachung der Bewegung des Tastelements.

In einer besonderen Ausgestaltung ist die Linse derart aufgebaut, dass die an den seitlichen Rändern oder auf der Unterseite der Linse einzelne oder mehrere optische Strukturen aufgebracht sind, die weitere optische Funktionen bereitstellen. Dazu gehören z. B. Gitternetze, Fadenkreuze oder konzentrische Kreise.

In einer weiteren Ausgestaltung ist die Linse derart ausgestaltet, dass sich an ihrem seitlichen Rand innerhalb oder auf der Oberfläche der Linse mindestens eine Spiegelfläche befindet, die eine Abbildung der Umgebung außerhalb des Sehfelds der Linse ermöglicht.

In einer weiteren Ausgestaltung dient die Linse, den Blickwinkel beim Einsatz einer Schrägsichtkamera zu kompensieren.

In einer weiteren Ausgestaltung dient die Linse dazu, um Objekte, die sich in Medien mit von der Luft verschiedenen optischen Dichten zu vermessen. Eine derartige Linse wird z.B. dazu eingesetzt, um bei Messungen unter Wasser bestehende Brechzahlübergänge zu kompensieren.

In einer besonderen Ausgestaltung wird die Linse aus zwei oder mehr vorzugsweise symmetrischen Teilen gebildet, die eine Aussparung aufweisen, mit der die Tasterverlängerung eingeschlossen wird.

Die erfindungsgemäße Vorrichtung weist insbesondere die im Folgenden aufgeführten Vorteile auf.

Der erfindungsgemäße Einsatz einer Linse ist preiswerter als eine Änderung der Optik in der Kamera. Die Linse kann reversibel montiert werden und lässt sich daher auch bei vorhandenen Messsystemen nachträglich einbauen.

Bei gleicher Systemoptik, die beispielsweise für ein Sehfeld von ca. 800 µm x 600 µm bei einer 10-fachen Vergrößerung ausgelegt ist, wird durch die vergrößerte Abbildung des Tastelements die Position oder Positionsänderung besser und höher aufgelöst erfasst. Damit wird das Messsystem insgesamt empfindlicher und führt keine quasi-quantisierte Bewegungserkennung mehr durch. Die für genaue Messungen erforderlichen Subpixeling-Routinen sind so auch für Tastelemente (Kugeln) mit einem Durchmesser unterhalb von 10 µm wieder einsetzbar.

In Verbindung mit einer Linse mit verringerter Apertur erhöht sich die Tiefenschärfe des Bildes. Damit lassen sich mögliche riskante Antastungen besser erkennen, ohne dass der Bauabstand zur empfindlichen Kameraoptik reduziert werden muss.

Durch den Einsatz einer Linse mit verringerter Apertur wird zusätzlich die Abbildungstreue erhöht. Abschattungsbedingte Verluste im Strahlengang werden so verringert. Dies steigert ebenfalls die Genauigkeit der Messung.

Durch den Einsatz einer als Lupe wirkenden Linse kann auf dem Sensorfeld besser erkannt werden, ob eine echte Antastung des Tastelements an die Wand des Objekts vorliegt oder nur so genannte *Stick-slip-Effekte* zu einer Bewegung des Tastelements führen. Zudem lässt sich so das Schaltspiel eines messenden Tasters ermitteln, wenn man die optisch erfasste Berührung mit dem Schaltsignal verrechnet.

Durch den Einsatz kleinerer Tastelemente sind Rauwertsmessungen mit höherer Qualität möglich.

Durch den Einsatz kleinerer Tastelemente entfällt die Notwendigkeit des Einsatzes von teuren stärker vergrößernden Linsen. Außerdem ist bei einer hochgenauen Optik mit niedriger Vergrößerung die Orientierung auf dem Messtisch einfacher, was zusätzliche Vorteile für die Bediener bringt.

Die Erfindung wird im Folgenden anhand von Ausführungsbeispielen erläutert. Die Figuren zeigen im Einzelnen:
- **Fig. 1a**: Schematische Darstellung einer Vorrichtung aus dem Stand der Technik (links) und einer erfindungsgemäßen Vorrichtung (rechts) einschließlich des jeweils auf dem Sensorfeld abgebildeten Bildes des Tastelements.
- **Fig. 1b**: Aus zwei symmetrischen Teilen zusammengesetzte Linse sowie die darin eingeschlossenen Tasterverlängerung
- **Fig. 2**: Tasterverlängerung mit Halterung, Linse und Tastelement
- **Fig. 3**: Unterbrochene Tasterverlängerung mit Halterung, Verbindungen, Zusatzelementen, starrer Linse und Tastelement
- **Fig. 4a**: Vorrichtung mit Verbindungen, die über Lager verfügen, so dass die Linse beweglich ist.
- **Fig. 4b**: Vorrichtung mit Verbindungen, die über eine Kulisse verfügen, die der Linse eine Rotation um eine horizontale Achse durch ihren Mittelpunkt aufzwingt.
- **Fig. 5**: Vorrichtung mit Piezostäben mit starrer optischer Achse
- **Fig. 6**: Vorrichtung mit Piezostäben in Tripod-Anordnung mit beweglicher optischer Achse

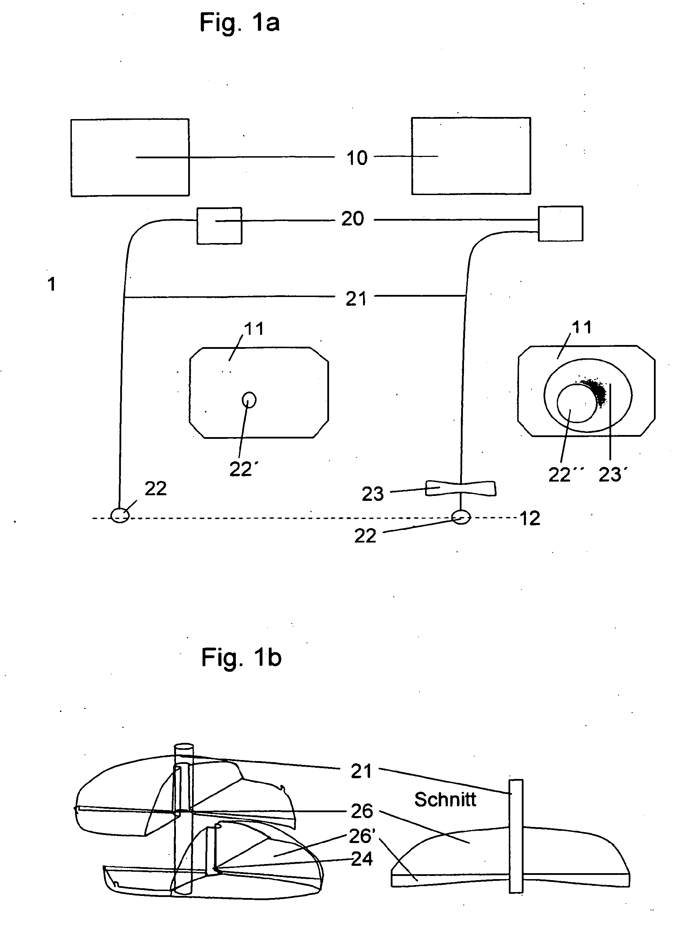

**Fig. 1a** zeigt schematisch eine Vorrichtung aus dem Stand der Technik (links) und eine erfindungsgemäße Vorrichtung (rechts) einschließlich des jeweils auf dem Sensorfeld abgebildeten Bildes des Tastelements. Jeweils an der Spitze einer Tasterverlängerung **21,** die an einer Tastelementaufhängung **20** befestigt ist, ist ein näherungsweise kugelförmiges Tastelement **22** angebracht. Gemäß dem Stand der Technik führt das beleuchtete Tastelement **22,** das sich vorzugsweise in der Ebene **12** des Brennpunkts des optischen Sensors (Kamerafokus) befindet, zu einem Bild **22'** des Tastelements **22** im Bild **11** des optischen Sensors (Kamerabild). Erfindungsgemäß ist oberhalb der Ebene **12** des Brennpunkts des optischen Sensors (Kamerafokus) eine Linse **23** angebracht, wodurch sich im Bild **11** des optischen Sensors (Kamerabild) nunmehr das im Vergleich zum Stand der Technik vergrößerte Bild **22'** des Tastelements **22** innerhalb des Bildes **23'** der Linse ergibt.

**Fig. 1b** zeigt ein Ausführungsbeispiel für den Aufbau der Linse **23.** Hierzu ist die Linse **23'** aus zwei spritzgegossenen symmetrischen Teilen **26, 26',** die die Tasterverlängerung **21** im Bereich der Aussparung **24** einschließen, zusammengesetzt.

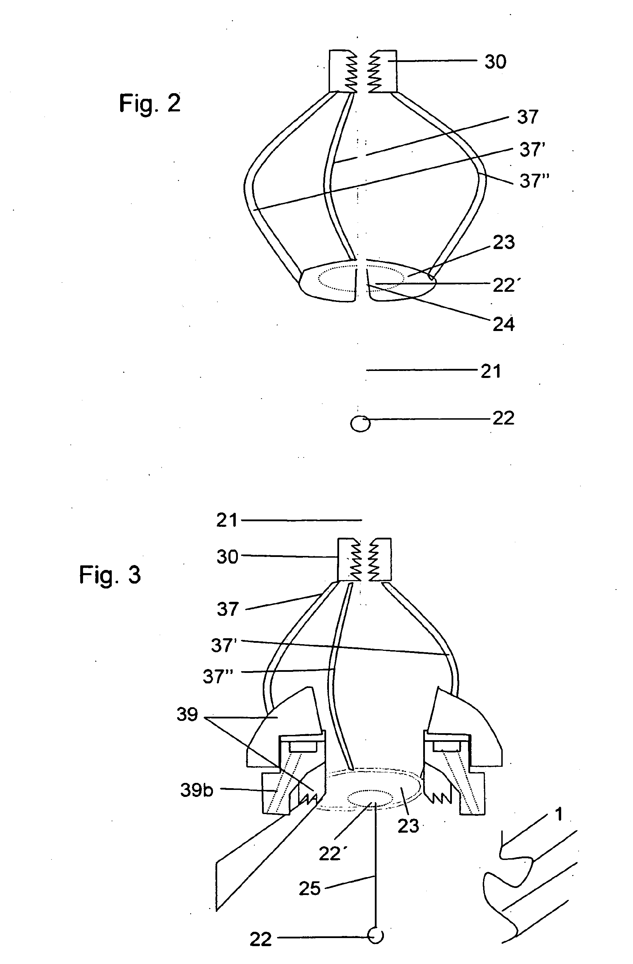

In **Fig. 2** ist schematisch eine vorteilhafte Ausgestaltung der erfindungsgemäßen Vorrichtung dargestellt. An der Spitze einer Tasterverlängerung **21** ist ein kugelförmiges Tastelement **22** angebracht. Weiterhin ist die Tasterverlängerung **21** mit einer Halterung **30** versehen, die an drei Seiten insbesondere mechanische Verbindungen **37, 37', 37''** besitzt, die eine Linse **23** tragen, die eine Aussparung **24** für die Tasterverlängerung **21** aufweist. Das auf der Linse **23** abgebildete Bild **22'** des Tastelements **22** zeigt die Vergrößerungswirkung der Linse.

**Fig. 3** zeigt ein weiteres Ausführungsbeispiel. Die Tasterverlängerung **21** ist mit einer Halterung **30** versehen, deren optische Ebene **38** oberhalb des Brennpunkts des optischen Sensors liegt. Die Halterung **30** weist drei insbesondere mechanische Verbindungen **37, 37', 37''** auf, an denen jeweils als Zusatzelemente in einer ersten optischen Ebene **36** ein lichtsammelndes Element **31, 31'** darunter ein Luftkanal **33, 33',** hieran anschließend ein Luftaustrittskanal **34, 34'** und in einer zweiten optischen Ebene **36'** ein lichtbündelndes Element **32, 32'** angebracht sind. Die Luftkanäle **33, 33'** sind jeweils mit einer Druckluftzufuhr **35, 35'** verbunden. Das vom lichtsammelnden Element **31** gesammelte Licht wird über das lichtbündelnde Element **32** so auf die Wand **1** des Objekts geworfen, dass das Tastelement **22** besonders gut ausgeleuchtet wird. Das kugelförmige Tastelement **22** ist an einer sekundären Tasterverlängerung **25** angebracht, die aufgrund der Aussparung der Tasterverlängerung **21** zwischen der Halterung **30** und der Linse **23** zwischen der Linse **23** und dem Tastelement **22** vorgesehen ist. Das auf der Linse **23** abgebildete Bild **22'** des Tastelements **22** zeigt auch hier die Vergrößerungswirkung der Linse.

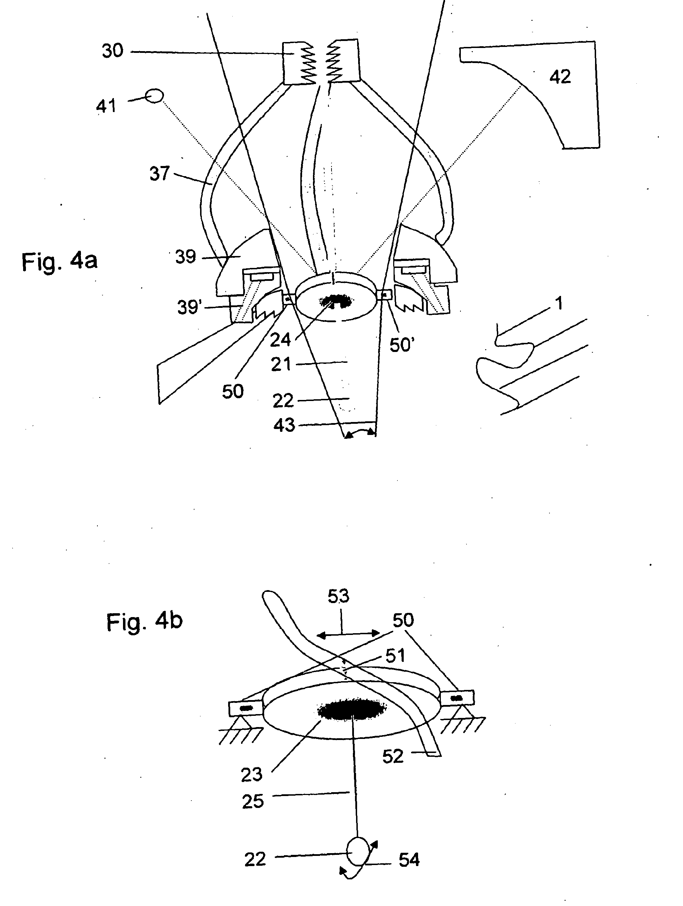

**Fig. 4a** zeigt ein Ausführungsbeispiel einer passiven Vorrichtung mit Linse **23** und Halterung **30,** die sich von der in **Fig. 3** dargestellten Vorrichtung darin unterscheidet, dass die Tasterverlängerung **21** nicht unterbrochen ist und die Linse **23** zusätzlich mit einer Lagerung **50, 50'** versehen ist, die die Linse mit Rotationsfreiheitsgraden ausstattet. Der Nachweis der Auslenkung der Linse **23** erfolgt durch einen Neigungssensor **42,** der von dem von der Lichtquelle **41** erzeugten Licht, das von der Linse **23** reflektiert wird, beaufschlagt wird und auf diese Weise die Neigung der Linse **23** feststellt. Diese Vorrichtung benötigt nicht notwendigerweise Rückstellmomente, weil eine Verschiebung des Tastelements **22** innerhalb des aperturbedingten Bildausschnitts **43** in jedem Fall sichtbar wird, und zwar unabhängig davon, ob die Tasterverlängerung **21** starr oder biegeelastisch ist. Die Linse **23** weist durch den endlichen Durchmesser der Tasterverlängerung **21,** der in ihrer optischen Achse angeordnet ist, einen optisch nicht wirksamen Mittelpunkt auf.

Statt eine passiven Vorrichtung kann die Auslenkung des Tastelements **22,** wie in **Fig. 4b** dargestellt, z.B. dadurch erzwungen werden, dass eine Kulisse **52** vorgesehen ist, die der Linse **23** eine Rotation um eine horizontale Achse durch den Mittelpunkt der Linse **23** aufzwingt.

Dies lässt sich auch mehrfach für verschieden orientierte Achsen zum Erreichen mehrerer Freiheitsgrade anwenden. Die durch die Kraftübertragung **51** erzwungene Bewegung **53** für die Auslenkung bewirkt schließlich eine resultierende Bewegung **54** des Tastelements **22.**

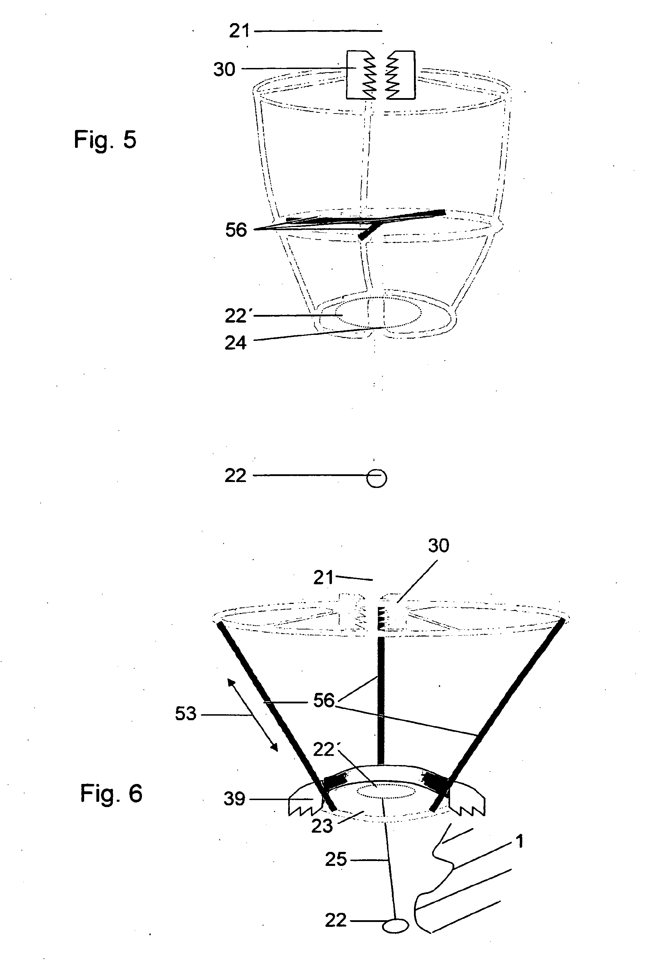

Eine aktive Auslenkung der Linse erfolgt im Ausführungsbeispiel nach **Fig. 5****.** Hier wird die Linse **23** über Piezostäbe **56** innerhalb einer starren optischen Achse bewegt.

Eine aktive Auslenkung der Linse **23** wird über Piezostäbe **56,** die in Tripod-Anordnung mit beweglicher optischer Achse angeordnet sind, gemäß **Fig. 6** erreicht.

### Bezugszeichenliste

- **1**: Wand des Objekts
- **10**: Optischer Sensor (Kamera)
- **11**: Bildbereich des optischen Sensors **10** (Kamerabild)
- **12**: Ebene des Brennpunkts des optischen Sensors **10** (Kamerafokus)
- **20**: Aufhängung der Tasterverlängerung **21**
- **21**: Tasterverlängerung (Schaft)
- **22**: Tastelement (Kugel)
- **22'**: Bild des Tastelements **22**
- **22"**: weiteres Bild des Tastelements **22**
- **23**: Linse
- **23'**: Bild der Linse **23**
- **24**: Aussparung in der Linse **23** für Tasterverlängerung **21**
- **25**: sekundäre Tasterverlängerung
- **26, 26'**: Teile der Linse
- **30**: Halterung (Halter)
- **31**: Lichtsammelndes Element
- **32**: Lichtbündelndes Element
- **33**: Luftkanal
- **34**: Luftaustrittskanal
- **35**: Druckluftzufuhr
- **36**: erste optische Ebene
- **36'**: zweite optische Ebene
- **37, 37', 37''**: (Mechanische) Verbindung zur Halterung
- **38**: Optische Ebene der Halterung
- **39, 39'**: Zusatzelemente
- **41**: Lichtquelle für Neigungssensor
- **42**: Sensor für Licht
- **43**: Aperturbedingter Bildausschnitt
- **50, 50'**: Lagerung der Linse **23**
- **51**: Kraftübertragung
- **52**: Kulisse
- **53**: Bewegung für Auslenkung
- **54**: Resultierende Bewegung
- **56, 56'**: Piezostäbe für Auslenkung

## Patentansprüche

1. Vorrichtung zur Messung von Strukturen eines Objekts mit einem Tastelement (22), das von einer Tasterverlängerung (21) ausgeht, einem optischen Sensor (10) zur Aufnahme eines Bildes des Tastelements (22) auf einem Sensorfeld, und einer Auswerteeinheit, mit der aus der Position des optischen Sensors zum Koordinatensystem eines Koordinatenmessgeräts und mittels des optischen Sensors gemessenen Position des Tastelements (22) die Strukturen berechenbar sind, **dadurch gekennzeichnet, dass** an der Tasterverlängerung (21) zwischen dem optischen Sensor (10) und dem Tastelement (22) eine Linse (23) angebracht ist.

2. Vorrichtung nach Anspruch 1, **dadurch gekennzeichnet, dass** die Linse (23) zumindest teilweise außerhalb des Brennpunkts des optischen Sensors (10) angebracht ist.

3. Vorrichtung nach Anspruch 1 oder 2, **dadurch gekennzeichnet, dass** die Linse (23) annähernd radialsymmetrisch zur Tasterverlängerung (21) angebracht ist.

4. Vorrichtung nach einem der Ansprüche 1 bis 3, **dadurch gekennzeichnet, dass** die Linse (23) so ausgestaltet ist, dass der Krümmungsradius der dem Tastelement (22) zugewandten Seite der Linse (23) größer ist als der Krümmungsradius der dem Tastelement (22) abgewandten Seite der Linse (23).

5. Vorrichtung nach einem der Ansprüche 1 bis 4, **dadurch gekennzeichnet, dass** sich die Linse (23) aus mindestens zwei Teilen (26, 26') zusammensetzt.

6. Vorrichtung nach einem der Ansprüche 1 bis 5, **dadurch gekennzeichnet, dass** die Linse (23) zusätzlich mit optischen Strukturen versehen ist.

7. Vorrichtung nach einem der Ansprüche 1 bis 6, **dadurch gekennzeichnet, dass** an der Tasterverlängerung (21) eine Halterung (30) angebracht ist.

8. Vorrichtung nach Anspruch 7, **dadurch gekennzeichnet, dass** die Halterung (30) mit mindestens einer Verbindung (37) versehen ist, wobei die Linse (23) mit der mindestens einen Verbindung (37) verbunden ist.

9. Vorrichtung nach Anspruch 7 oder 8, **dadurch gekennzeichnet, dass** die Halterung (30) mit mindestens einer Verbindung (37) versehen ist, wobei an die mindestens eine Verbindung (37) mindestens ein Zusatzelement (39) angebracht ist.

10. Vorrichtung nach Anspruch 9, **dadurch gekennzeichnet, dass das** mindestens eine Zusatzelement (39) mindestens ein lichtsammelndes Element (31) oder mindestens ein lichtbündelndes Element (32) umfasst.

11. Vorrichtung nach Anspruch 9 oder 10, **dadurch gekennzeichnet, dass** das mindestens eine Zusatzelement (39) mindestens einen Luftkanal (33) umfasst.

12. Vorrichtung nach Anspruch 11, **dadurch gekennzeichnet, dass** der Luftkanal (33) mit eine Druckluftzufuhr (35) verbunden ist.

13. Vorrichtung nach einem der Ansprüche 7 bis 12, **dadurch gekennzeichnet, dass** die Tasterverlängerung (21) auf einem Teilstück zwischen der Halterung (30) und der Linse (23) unterbrochen ist.

14. Vorrichtung nach einem der Ansprüche 7 bis 13, **dadurch gekennzeichnet, dass** die Verbindung (37) über Lager (50, 50') verfügt, über die die Linse (23) bezüglich mindestens einem Rotationsfreiheitsgrad beweglich ist.

15. Vorrichtung nach Anspruch 14, **dadurch gekennzeichnet, dass** die mindestens eine Verbindung (37) mindestens drei Piezostäbe umfasst, womit die Bewegung der Linse (23) steuerbar ist.

16. Vorrichtung nach Anspruch 15, **dadurch gekennzeichnet, dass** die mindestens drei Piezostäbe in Form eines Tripods angeordnet sind.

## Claims

1. Device for measuring structures of an object by means of a probe element (22) that extends from a probe extension (21), an optical sensor (10) for capturing an image of the probe element (22) on a sensor field and an evaluation unit, with which the structures are calculatable from the position of the optical sensor in relation to the coordinate system of a coordinate measuring device and from the position the probe element (22) measured by the optical sensor, **characterized in that** a lens (23) is mounted on the probe extension (21) between the optical sensor (10) and the probe element (22).

2. Device according to Claim 1, **characterized in that** the lens (23) is mounted at least partially outside the focal point of the optical sensor (10).

3. Device according to Claim 1 or 2, **characterized in that** the lens (23) is mounted approximately radially symmetrical in relation to the probe extension (21).

4. Device according to one of claims 1 to 3, **characterized in that** the lens (23) is developed such that the radius of curvature of the side of the lens (23) facing the probe element (22) is greater than the radius of curvature of the side of the lens (23) remote from the probe element (22).

5. Device according to one of claims 1 to 4, **characterized in that** the lens (23) is composed of at least two parts (26, 26').

6. Device according to one of claims 1 to 5, **characterized in that** the lens (23) is additionally provided with optical structures.

7. Device according to one of claims 1 to 6, **characterized in that** a holder (30) is mounted on the probe extension (21).

8. Device according to Claim 7, **characterized in that** the holder (30) is provided with at least one connection (37), wherein the lens (23) is connected to the at least one connection (37).

9. Device according to Claim 7 or 8, **characterized in that** the holder (30) is provided with at least one connection (37), wherein at least one additional element (39) is mounted on the at least one connection (37).

10. Device according to Claim 9, **characterized in that** the at least one additional element (39) includes at least one light-gathering element (31) or at least one light-bundling element (32).

11. Device according to Claim 9 or 10, **characterized in that** the at least one additional element (39) includes at least one air duct (33).

12. Device according to Claim 11, **characterized in that** the air duct (33) is connected to a compressed air supply (35).

13. Device according to one of claims 7 to 12, **characterized in that** the probe extension (21) is interrupted on a part section between the holder (30) and the lens (23).

14. Device according to one of claims 7 to 13, **characterized in that** the connection (37) has bearings (50, 50'), by means of which the lens (23) is displaceable with reference to at least one rotational degree of freedom.

15. Device according to Claim 14, **characterized in that** the at least one connection (37) includes at least three piezo rods, by means of which the displacement of the lens (23) is controllable.

16. Device according to Claim 15, **characterized in that** the at least three piezo rods are disposed in the form of a tripod.

## Revendications

1. Dispositif pour mesurer les structures d'un objet comprenant :
- un élément palpeur (22) venant en prolongement du palpeur (21),
- un capteur optique (10) pour saisir une image de l'élément palpeur (22) sur un champ de capteurs, et
- une unité d'exploitation qui calcule les structures à partir de la position du capteur optique par rapport au système de coordonnées d'un appareil de mesure de coordonnées et au moyen de positions de l'élément palpeur (22) mesurées par le capteur optique,
**caractérisé en ce que**
le prolongement du palpeur (21) porte une lentille (23), entre le capteur optique (10) et l'élément palpeur (22).

2. Dispositif selon la revendication 1,
**caractérisé en ce que**
la lentille (23) est au moins partiellement disposée à l'extérieur du foyer du capteur optique (10).

3. Dispositif selon la revendication 1 ou 2,
**caractérisé en ce que**
la lentille (23) est au moins approximativement en symétrie radiale par rapport au prolongement du palpeur (21).

4. Dispositif selon les revendications 1 à 3,
**caractérisé en ce que**
la lentille (23) est réalisée de sorte que son rayon de courbure tourné vers l'élément palpeur (22) soit supérieur au rayon de courbure de son côté non tourné vers l'élément palpeur (22).

5. Dispositif selon les revendications 1 à 4,
**caractérisé en ce que**
la lentille (23) est composée d'au moins deux parties (26, 26').

6. Dispositif selon les revendications 1 à 5,
**caractérisé en ce que**
la lentille (23) est pourvue en outre de structures optiques.

7. Dispositif selon les revendications 1 à 6,
**caractérisé en ce que**
le prolongement du palpeur (21) comprend une fixation (30).

8. Dispositif selon la revendication 7,
**caractérisé en ce que**
la fixation (30) est munie d'au moins une liaison (37), à laquelle est reliée la lentille (23).

9. Dispositif selon la revendication 7 ou 8,
**caractérisé en ce que**
la fixation (30) est munie d'au moins une liaison (37) comportant au moins un élément complémentaire (39).

10. Dispositif selon la revendication 9,
**caractérisé en ce qu'**
l'élément complémentaire (39) comprend au moins un élément (31) photo collecteur ou au moins un élément focalisant.

11. Dispositif selon la revendication 9 ou 10,
**caractérisé en ce qu'**
l'élément complémentaire (39) présente au moins un canal de ventilation (33).

12. Dispositif selon la revendication 11,
**caractérisé en ce que**
le canal de ventilation (33) est relié à une alimentation en air sous pression (35).

13. Dispositif selon les revendications 7 à 12,
**caractérisé en ce que**
le prolongement du palpeur (21) est partiellement interrompu entre la fixation (30) et la lentille (23).

14. Dispositif selon les revendications 7 à 13,
**caractérisé en ce que**
la liaison (37) comporte des paliers (50, 50') à l'aide desquels la lentille (23) est mobile en rotation selon au moins un degré de liberté.

15. Dispositif selon la revendication 14,
**caractérisé en ce que**
la liaison (37) comprend au moins trois tiges piézo-électrique pour commander les mouvements de la lentille (23).

16. Dispositif selon la revendication 15,
**caractérisé en ce que**
les trois tiges piézo-électrique sont disposées sous la forme d'un tripode.
